(19)

Europäisches
Patentamt

European
Patent Office

Office européen
des brevets

(11) **EP 4 644 493 A1**

(12) **EUROPEAN PATENT APPLICATION**

(43) Date of publication:
**05.11.2025 Bulletin 2025/45**

(21) Application number: **24174165.1**

(22) Date of filing: **03.05.2024**

(51) International Patent Classification (IPC):
*C09D 5/00* (2006.01)          *C09D 7/61* (2018.01)
*C09D 7/63* (2018.01)          *C09D 101/00* (2006.01)
*C09D 103/00* (2006.01)          *C09D 105/00* (2006.01)

(52) Cooperative Patent Classification (CPC):
**C09D 5/00; C09D 7/61; C09D 7/63; C09D 101/00; C09D 103/00; C09D 105/00;** C08K 3/013; C08K 5/0016; C08K 5/053

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NUVI RELEAF GMBH**
**35463 Fernwald (DE)**

(72) Inventors:
• **RIBERIO, Filipe**
  **60327 Frankfurt am Main (DE)**
• **RÖSSLER, Andreas**
  **35463 Fernwald (DE)**

(74) Representative: **WSL Patentanwälte**
**Partnerschaft mbB**
**Kaiser-Friedrich-Ring 98**
**65185 Wiesbaden (DE)**

(54) **COMPOSITION**

(57) The invention relates to a composition, a composite, and an object coated with a composite in the form of a coating.

**EP 4 644 493 A1**

## Description

## FIELD OF THE INVENTION

The invention relates to a composition, a composite, a coating, and an object coated with this coating.

## BACKGROUND OF THE INVENTION

Material formulations are specifically designed compositions prepared to achieve desired properties and functionalities in various manufacturing processes. An example for such a composition is a coating formulation, from which a protective or functional layer can be formed on an object. Another example is an injection moulding compound, which is melted and then cooled within a mould. These compositions are composed of several key components, each serving specific roles to impart desired properties to the final dried and/or cured product, *i.e.* the composite (also called composite material). The main components are regularly binders, fillers, solvents, and additives.

Binders are substances that hold or draw other materials (filler material and/or the plasticizer and/or optional additives) together to form a cohesive composite.

Fillers are inert materials added to improve physical properties of the composite, such as hardness, durability, and resistance to wear. Fillers can also affect the viscosity and the overall cost-effectiveness of the composition. The mechanical properties, durability, and resistance of the composite to environmental factors are mainly influenced by both the binder and the filler.

The solvent of the composition dissolves or disperses the binder and other components for simplifying or enabling the processing. Solvents evaporate after processing. In case of a coating formulation, this allows the coating to form a solid film.

Finally, a wide range of substances can be added in small quantities to enhance specific characteristics of the final composite (e.g. a coating). These can include *inter alia* UV stabilizers, anti-foaming-, wetting-, and anti-settling agents.

However, the binder materials regularly used in the prior art - such as disclosed in KR101236734 B1 - are based on synthetic polymers like acrylics, polyurethanes, alkyds, and epoxides, that are made from limited fossil resources, e.g. petroleum, and exclude or at least limit the biodegradability of the coating. In addition, such binders usually necessitate the use of organic solvent or dispersion agent, which are complex to handle and harmful to the environment and/or health.

## AIM

Therefore, against this background, the object of the invention is to provide a composition obtainable with a simpler and an environmentally friendlier and/or more sustainable manner than the compositions known in the art and/or which results in at least partially biodegradable and/or bio-based dried and/or cured product (=composite) and/or which can be used in a broad variety of different applications.

## DESCRIPTION OF THE INVENTION

According to the invention, this object is solved by a composition comprising the following components:

    A) a polysaccharide binder,
    B) a filler material,
    C) a plasticizer, namely a polyhydric alcohol, and
    D) a solvent, preferably water,

wherein the weight ratio of component D) to component A) is $\geq 1$, preferably $\geq 5$.

The inventive composition comprises at least one binder, i.e. a substance that can form a matrix that holds or draws other materials (filler material and/or the plasticizer and/or optional additives) together in order to form a cohesive composite material after a drying and/or curing process. Preferably, the binder is a film-forming material, which is embedding or dissolving the filler material and/or the plasticizer and/or optional additives. After the evaporation of the solvent the matrix formed out of the binder ensures the cohesion of the cohesive composite material and preferably its adhesion to the substrate, if the composition is applied to one. The binder is present in the cohesive composite material in its set form and serves as a matrix material.

A polysaccharide is a complex carbohydrate macromolecule composed of long chains of monosaccharide units bound together by glycosidic linkages.

Filler materials are substances embedded within the matrix formed out of the binder, which are inert and do not react chemically with the polysaccharide matrix. Fillers can be used to enhance mechanical strength, thermal stability, electrical conductivity, or other physical properties of the binder. The filler material is preferably selected from the group consisting of mineral fillers, metallic fillers, organic fillers, synthetic fillers, fiber material fillers, nanofillers and mixtures of the foregoing.

The plasticizer is a substance added to the composition to increase flexibility, workability, and/or distensibility and/or to improve tactile properties, reduce brittleness, and/or lower the glass transition temperature of the coating obtained after hardening of the composition. Within the course of the hardening process of the binder, the plasticizer can form - preferably covalent - bonds with the binder, thereby permanently fixing the plasticizer in the matrix of the final composite. Hence, in the final coating the plasticizer can be contained both in bound or unbound state.

The term "solvent" refers to a liquid medium, in which a substance or mixtures can be dissolved or dispersed.

Through the combination of binder, plasticizer and filler, a composite with sufficient stability can be obtained, which is at the same time elastically deformable. In order to maintain these properties, achieved in particular through the mixture of filler material and binder, over a longer period of time, the coating must contain the plasticizer. By integrating the plasticizer into the polymeric matrix, the plasticizer decreases the intermolecular forces between the polymer chains, allowing them to slide past each other more easily. This process enhances the material's workability, flexibility, and can also impact its thermal properties.

Without being bound by the theory, the inventors assume that the polyhydric alcohol at least partially reacts with the free functional groups of the polysaccharide binder thereby disturbing its crystalline structure in the matrix. As a consequence, these materials exhibit a less pronounced crystallinity, which results in enhanced material's workability (lower gelation temperature $T_g$) as well as higher transparency.

To ensure a sufficiently pronounced reaction between polysaccharide and polyhydric alcohol, the weight ratio of mass of solvent D) ($m_{D)}$) to mass of polysaccharide binder A) ($m_{A)}$) needs to be

$$\frac{m_{D)}}{m_{A)}} \geq 1$$

, preferably $\geq 3$, more preferably $\geq 5$, even more preferably $\geq 8$ and most preferably $\geq 12$, but in general also $\leq 150$.

The higher the binder content in the formulation, the higher the cohesion of the composite and the better the film formation in case of a coating formulation. Preferably, the polysaccharide binder is contained in the inventive composition with $\geq 1$ wt.-%, more preferred with $\geq 3$ wt.-%, even more preferred with $\geq 5$ wt.-% or $\geq 8$ wt.-%, and most preferred with $\geq 10$ wt.-% or $\geq 12$ wt.-%.

However, a too high binder content may impact both the application process and the performance of the final coating and may result in problems such as long drying times, difficult application, poor film formation and increased risk of defects in the final coating. Therefore, preferably, the binder content is $\leq 50$ wt.-%, preferably $\leq 40$ wt.-%, more preferred $\leq 30$ wt.-% and most preferred $\leq 20$ wt.-% or even $\leq 15$ wt.-%.

In a preferred embodiment of the invention the composition comprises 2-30 wt.-% of the polysaccharide binder, preferably 3-25 wt.-%, more preferred 4-20 wt.-%, even more preferred 5-18 wt.-% and most preferred 5-15 wt.-%.

Regularly, a higher filler content in the composition improves the mechanical properties of the final coating. Further, an enhanced filler content may improve shrinkage behavior and reduce the costs of production and results in a distinctive aesthetic look. Preferably, the filler is contained in the inventive composition with $\geq 3$ wt.-%, more preferred with $\geq 5$ wt.-%, even more preferred with $\geq 8$ wt.-% or $\geq 10$ wt.-%, and most preferred with $\geq 12$ wt.-% or $\geq 15$ wt.-%.

However, the filler content preferably does not exceed a certain threshold, as this might lead to application difficulties and a reduced flexibility of the final coating. Therefore, preferably, the filler content is $\leq 50$ wt.-%, preferably $\leq 40$ wt.-%, more preferred $\leq 30$ wt.-% and most preferred $\leq 25$ wt.-% or even $\leq 20$ wt.-%.

In a preferred embodiment of the invention the composition comprises 3-35 wt.-% of the filler, preferably 3-25 wt.-%, more preferred 4-20 wt.-%, even more preferred 5-18 wt.-% and most preferred 5-15 wt.-%.

The inventive plasticizer enhances the flexibility and softness of the material. A high plasticizer content is not only beneficial for these properties, but it also decreased brittleness and reduces glass transition temperature, which make the material more pliable at lower temperatures. Preferably, the plasticizer is contained in the inventive composition with $\geq 2$ wt.-%, more preferred with $\geq 3$ wt.-%, even more preferred with $\geq 5$ wt.-% or $\geq 8$ wt.-%, and most preferred with $\geq 10$ wt.-% or $\geq 12$ wt.-%.

However, the plasticizer content preferably does not exceed a certain threshold, as this might lead to reduced mechanical strength and temperature sensitivity. Therefore, preferably, the plasticizer content in the composition is $\leq 50$ wt.-%, preferably $\leq 40$ wt.-%, more preferred $\leq 30$ wt.-% and most preferred $\leq 20$ wt.-% or even $\leq 15$ wt.-%.

In a preferred embodiment of the invention the composition comprises 2-30 wt.-% of the plasticizer, preferably 3-25 wt.-%, more preferred 4-20 wt.-%, even more preferred 5-18 wt.-% and most preferred 5-15 wt.-%.

Preferably, the proportion of free plasticizer, i.e. plasticizer covalently unbound to the matrix material, in the inventive composition is $\geq 1$ wt.-%, more preferred $\geq 2$ wt.-%, even more preferred $\geq 3$ wt.-% or $\geq 5$ wt.-%, and most preferred $\geq 6$ wt.-% or $\geq 8$ wt.-%.

However, the free plasticizer content preferably does not exceed a certain threshold, as this might lead to substantial sweating effect. Therefore, preferably, the free plasticizer content in the composition is $\leq 25$ wt.-%, preferably $\leq 20$ wt.-%, more preferred $\leq 15$ wt.-% and most preferred $\leq 10$ wt.-% or even $\leq 5$ wt.-%.

In a preferred embodiment of the invention the composition comprises 1-20 wt.-% of the free plasticizer, preferably 2-20 wt.-%, more preferred 3-15 wt.-%, even more preferred 3-12 wt.-% and most preferred 3-10 wt.-%. The determination of the proportion of free plasticizer can be accomplished by following the procedure disclosed in ASTM D1239-14 (including 24 h incubation @ 23°C in the proposed liquids).

With a high content of solvent in the formulation, the binder and additives of the composition can be dissolved or dispersed homogenously in a short time frame. Therefore, preferably, the solvent contained in the inventive composition is $\geq 35$ wt.-%, more preferred $\geq 40$ wt.-%, even more preferred $\geq 45$ wt.-% or $\geq 50$ wt.-%, and most preferred $\geq 55$ wt.-% or even $\geq 60$ wt.-%.

However, a too high solvent content may result in unduly long drying times, poor film formation and increased risk of defects in the final coating. Therefore, preferably, the content of solvent is ≤ 95 wt.-%, preferably ≤ 90 wt.-%, more preferred ≤ 85 wt.-% and most preferred ≤ 80 wt.-% or ≤ 75 wt.-%.

In a preferred embodiment of the invention the composition comprises 35-95 wt.-% of solvent D), preferably 40-90 wt.-%, more preferred 45-90 wt.-%, even more preferred 50-90 wt.-% and most preferred 55-90 wt.-%.

Preferably, the solvent is a water-based solvent, i.e. a solvent with ≥ 50 wt.-%, preferably ≥ 70 wt.-% or even ≥ 90 wt.-%, water content. An example is a mixture of water and ethylacetate.

In a preferred embodiment, the composition is a dispersion, e.g. a slurry or an emulsion, and/or a coating formulation, i.e. a composition from which a protective or functional layer can be formed on an object.

In a preferred embodiment, the composition may contain additives such as pigments, UV stabilizers, flame retardants, dispersants, defoamers, fragrances, wetting agents, antioxidants, biocides, hydrophobic agents, and mixtures of the foregoing. By adding additives, the properties of the composition can be changed, in particular color, flow behavior, overall performance and manufacturing price.

The weight proportion of the component E) - the additive - in the composition is preferably 0.5-30 wt.-%, more preferred 1-20 wt.-%, even more preferred 2-15 wt.-%, and most preferred 2-10 wt.-%.

The polyhydric plasticizer alcohol is preferably a low molecular weight component with a molecular weight less than 1,000 g/mol, preferably less than 500 g/mol, and is particularly preferred selected from the group consisting of glycerol, sorbitol, 1,2-propanediol, glycol and alditols. Regularly, low molecular weight plasticizers have a higher efficiency as regards softening of the polysaccharide binder. This means that lower amounts might be needed to achieve the desired flexibility, thereby improving the material's overall performance and cost profile.

However, the polyhydric plasticizer alcohol can also be a polymeric material such as a polyethylene glycol or polyethylene oxide. Due to their larger size and mass, high molecular weight plasticizers have a lower tendency to migrate out of the polymer matrix or volatilize over time, in particular in high temperature applications.

In a preferred embodiment the composition may comprise glass, in particular glass powder, as filler material.

In a preferred embodiment the composition may comprise one or more inorganic salts as filler material. Inorganic salts result in coatings with particularly high mechanical resistance, which is one of the reasons why these filler materials are particularly preferred.

According to the invention, "inorganic salt" is understood to be an inorganic, crystalline substance which is composed of positively charged ions (cations) and negatively charged ions (anions). Ionic bonds exist between these ions. As a solid, these together form an ion lattice that is responsible for the strength of the material. The inorganic salt is preferably a mineral compound, i.e. a crystallin, natural and inorganic component of the earth. The term is specified in the International Mineralogical Association's definition. The term inorganic salts also includes coordination compounds that are composed of one or more central atoms or ions and one or more ligands. By using minerals, the proportion of natural components of the dried and/or cured product, i.e. the composite can be further increased.

In a preferred embodiment of the invention, the one or more inorganic salts are selected from halides, in particular chlorides and bromides, oxides, hydroxides, sulphides, carbonates, sulphates, phosphates, nitrates and mixtures of the foregoing. Chlorides, bromides, phosphates and sulphates are particularly preferred. In a preferred embodiment of the invention, the inorganic salt is pH neutral, i.e. a 0.1 molar solution of the salt in water has a pH in the range of 5-9, preferably 6-8. In this way, impairment of the other components of the composite can be avoided and a more durable composite can be obtained.

Particularly preferred is the use of minerals, such as Quartz, Feldspar, Calcite, Mica, Pyrite, Hematite, Gypsum, Halite, Bauxite, Galena, Fluorite, Apatite, Dolomite, Olivine, Talc, Muscovite, Biotite, Garnet, Barite, Sphalerite, Magnetite, Chalcopyrite, Ilmenite, Kaolinite, Rutile, Lepidolite, Tourmaline, Zircon, Serpentine, Azurite. Particularly preferred are Talc and Gypsum.

In a preferred embodiment of the invention, the inorganic salt comprises a metallic cation, preferably selected from the main metallic group elements, particularly preferably alkali metals and alkaline earth metals. Particularly preferably, the inorganic salt and/or the composite itself are free of heavy metals, i.e. the proportion of metals with a density 5.0 g/cm$^3$ in the inorganic salt is ≤ 1 wt.-%, preferably ≤ 0.1 wt.-%. This ensures that the composite according to the invention is particularly sustainable and environmentally compatible. Particularly preferably, the inorganic salt is a mineral, especially preferably chalk, kaolin, kaolinite, phyllosilicates, especially clay minerals, halloysite, marble, especially marble powder, iron oxide, especially iron(II) oxide and iron(III) oxide, titanium oxide or zeolite. Zeolites are particularly preferred because of their adsorption capacity, which can be used, for example, to absorb odors.

Due to its superior properties, marble powder, in particular marble powder with a D50 value determined by laser diffraction, such as according to DIN ISO 13320, not higher than 150 μm, preferably not higher than 50 μm, is particularly preferred.

Amongst others usable marble powders can be selected from the group consisting of Verona Red ("Rosso Verona"), Garda Rose ("Rosa del Garda"), Mori Yellow ("Giallo Mori"), Ebony Black ("Nero Ebano"), Alps Green ("Verde Alpi"), Carrara White ("Bianco Carrara") and recovery powders being dried from sawing sludge of marble and agglomerates.

In a preferred embodiment of the invention the mineral is a rock stone powder.

In a preferred alternative embodiment, the filler material of the composition comprises or consists of plant leaf material, i.e. whole or ground, untreated or treated leaves, in particular leaf dust. The term plant leaf material encompasses petals and sepals, i.e. leaves that surround the reproductive parts of flowers. However, preferably, the term does not encompass petals and/or sepals. "Treated leaves" are understood to be those plant leaves or ground portions thereof which have been preserved by fermentation, chemical treatment, in particular with alcohols, or by drying. In a preferred embodiment, the plant leaf material is fermented, i.e. it has been subjected to a fermentation process which has brought the dried leaves to a state suitable for storage and consumption.

Alternatively, or additionally, the plant leaf material may be chemically treated prior to use in the composition, preferably this is done with a mixture of water and a polyhydric alcohol such as glycerol. This is particularly advantageous when the plant leaf material comprises or consists of whole leaves or sections of leaves. This gives the plant leaf material elastic deformability and increased breaking strength, in particular increased tensile strength and bending strength. Furthermore, it has been found that the plant leaf material can continue to undergo a maturing process even in the composite, which improves the deformability and fracture strength of the material. The maturing process has a duration of at least one week, preferably two weeks, more preferably one month and most preferably two months.

Preferably the filler material is contained in the composition in powder form, wherein particularly preferred the D50 value, determined by laser diffraction according to DIN ISO 13320 is $\leq 150 \, \mu m$, more preferred $\leq 100 \, \mu m$, even more preferred $\leq 50 \, \mu m$ or $\leq 30 \, \mu m$ and most preferred $\leq 10 \, \mu m$.

In a preferred embodiment, the filler material or binder are colored with a synthetic or preferably natural colorant. This allows the optical properties of various types of animal leather to be imitated. In a particularly preferred embodiment of the invention, the coloring agent is partially or completely food safe and/or consists of substances which can be returned to biological cycles as biological nutrients or continuously kept in technical cycles as technical nutrients (cradle-to-cradle certification).

The polysaccharide binder may be selected from the group consisting of starch, cellulose, glycogen, chitin, hyaluronic acid, alginate, pectin or mixtures of the aforementioned.

The binder may be a synthetic polysaccharide. These are synthetic analogs designed to mimic the properties of natural polysaccharides.

However, in order to increase the biocompatibility and sustainability of the composite, preferably, the binder is a biopolymer, which particularly preferred consists of or at least comprises biogenic, i.e. renewable, raw materials, and/or is biodegradable. The biogenic material can be isolated from natural sources, wherein plants, animals, and microorganisms are particularly preferred

Preferably, the binder is a gelling agent.

Preferably, the polysaccharide is selected from the group consisting of agar-agar, chitosan, pectin, xanthan, carrageen, alginic acid and alginate, or mixtures of the aforementioned.

In a preferred embodiment, the binder and/or the coating and/or the composition are substantially free of polyurethane or polyvinyl chloride. In a particularly preferred embodiment, the binder and/or the coating and/or the composition are free of polyurethane and polyvinyl chloride. The invention enables dispensing with these materials which makes it possible to obtain an ecologically safe material, since these polymers release partially toxic compounds during their decomposition. Particularly preferred, the composition is free of any synthetic polymer material. In the foregoing context, "substantially free" means that the proportion by weight of polyurethane and/or polyvinyl chloride and/or synthetic polymer material in the total weight of the binder and/or the coating and/or the composition is $\leq 20$ wt.-%, preferably $\leq 10$ wt.-%, more preferably $\leq 5$ wt.-%, more preferably $\leq 2$ wt.-%, even more preferably $\leq 1$ wt.-%, and most preferably $\leq 0.5$ wt.-%.

The inventors observed that aliphatic alcohols exhibit a pronounced plasticizing effect. Particularly preferred is the use of polyhydric alcohols with a chain length of $C_2$ to $C_{20}$, in particular $C_2$ to $C_{10}$. Without being bound by this theory the inventors assume that such a short aliphatic can better penetrate into and crosslink the binder matrix and therefore less amount of plasticizer is needed, which can be beneficial for the mechanical properties of the product.

The invention also relates to a composite, such as an injection moulding compound or a coating comprising, a 1) polysaccharide matrix, a 2) filler material, preferably comprising or consisting of an inorganic salt, and 3) a plasticizer, namely a polyhydric alcohol, wherein the weight proportions of the components 1) to 3) in the coating are as follows:

    1) 20-45wt.-%,
    2) 5-45 wt.-%,
    3) 10-30 wt.-%.

The higher the matrix content in the composite, the higher the cohesion of the composite. Preferably, the polysaccharide matrix is contained in the inventive composite with $\geq 20$ wt.-%, more preferred with $\geq 25$ wt.-%, even more preferred with $\geq 30$ wt.-%.

However, a too high matrix content may impact both the performance of the composite and may result in increased risk of defects in the final composite. Therefore, preferably, the polysaccharide matrix content is $\leq 45$ wt.-%, preferably $\leq 40$ wt.-%, more preferred $\leq 35$ wt.-%.

In a preferred embodiment of the invention the composite comprises 20-45 wt.-% of the polysaccharide matrix, preferably 20-40 wt.-%, more preferred 25-40 wt.-%, even more preferred 30-40 wt.-% and most preferred 30-35 wt.-%.

Regularly, a higher filler content in the composite improves the mechanical properties of the composite. Further, an enhanced filler content may improve shrinkage behavior and reduce the costs of production. Preferably, the filler is contained in the inventive composite with $\geq 5$ wt.-%, more preferred with $\geq 8$ wt.-%, even more preferred with $\geq 10$ wt.-% and most preferred with $\geq 12$ wt.-% or $\geq 15$ wt.-%.

However, the filler content preferably does not exceed a certain threshold, as this might lead to a reduced flexibility of the composite. Therefore, preferably, the filler content is $\leq 45$ wt.-%, preferably $\leq 40$ wt.-%, more preferred $\leq 35$ wt.-% and most preferred $\leq 30$ wt.-% or even $\leq 25$ wt.-%.

In a preferred embodiment of the invention the composite comprises 5-45 wt.-% of the filler, preferably 10-40 wt.-%, more preferred 15-40 wt.-%, even more preferred 20-40 wt.-% and most preferred 25-40 wt.-%.

The inventive plasticizer enhances the flexibility and softness of the composite. A high plasticizer content is not only beneficial for these properties, but it also decreased brittleness and reduces glass transition temperature, which make the material more pliable at lower temperatures. Preferably, the plasticizer is contained in the inventive composite with $\geq 10$ wt.-%, more preferred with $\geq 12$ wt.-%, even more preferred with $\geq 15$ wt.-% and most preferred with $\geq 20$ wt.-%

However, the plasticizer content preferably does not exceed a certain threshold, as this might lead to reduced mechanical strength and temperature sensitivity. Therefore, preferably, the filler content in the composite is $\leq 30$ wt.-%, preferably $\leq 28$ wt.-%, more preferred $\leq 25$ wt.-% and most preferred $\leq 22$ wt.-%.

In a preferred embodiment of the invention the composite comprises 10-30 wt.-% of the plasticizer, preferably 12-28 wt.-%, more preferred 15-25 wt.-%, even more preferred 15-25 wt.-% and most preferred 20-22 wt.-%.

In a preferred embodiment, the composite may contain additives such as pigments, UV stabilizer, flame retardants, dispersant, defoamers, fragrances, wetting agents, antioxidants, biocides, hydrophobic agents and other additives. By adding additives, the properties of the composite can be changed, in particular color, flow behavior and manufacturing price.

The weight proportion of the additive in the composite is preferably 1-40 wt.-%, more preferred 2-35 wt.-%, even more preferred 2-30 wt.-%, and most preferred 3-25 wt.-%.

The composite and its constituents can be configured as defined in the foregoing in respect to the composition.

In a further preferred embodiment, the transmission of the matrix of the composite in the visible wavelength range (380 to 750 nm) is $\geq 30\%$, preferably $\geq 50\%$, more preferably $\geq 60\%$ and most preferably of $\geq 80\%$. This makes it possible to obtain a coating, which can be particularly well backlit and can thus be used in various applications in the lighting field, for example as a coating for a lampshade or in the interior of a motor vehicle. In a preferred embodiment of the invention the composite exhibits a transmission, which is $\geq 30\%$, preferably $\geq 50\%$, more preferably $\geq 60\%$ and most preferably of $\geq 80\%$.

Residual solvents can affect the physical properties of a composite. They may lead to problems like poor adhesion, lower mechanical strength, or undesired changes in the film properties. A low solvent content helps ensure the composite performs as intended.

Therefore, in a preferred embodiment, the proportion by weight of residual solvent and/or water in the composite is $\leq 10$ wt.-%, more preferably $\leq 5$ wt.-%, still considerably more preferably $\leq 2$ wt.-%, still more preferably $\leq 1$ wt.-% and most preferably $\leq 0.5$ wt.-% or even $\leq 0.1$ wt.-%.

The invention also relates to an object coated with an inventive coating, wherein the object is preferably selected from the group consisting of automotive parts, in particular automotive interior parts; steel objects, leather, artificial leather, foams, in particular biobased foams and/or latex foams; fiber materials such as yarns or textiles, appliances, tools, wood objects, electronic devices, footwear, textiles, paper products, concrete objects, medical devices, food and beverage containers. The object can have a monolithic or a multilayer structure. For coating the object a direct coating process or a transfer coating process can be used.

In a preferred embodiment of the invention the object coated with the inventive coating comprises or consists of a material selected from the group consisting of wood, glass, polymer, metal or mixtures of the foregoing. Particularly preferred are these materials initially coated, e.g. with a water based acrylic or latex coating and on top of this coating the inventive coating is deposited.

The invention also relates to a layer composite comprising an inventive coating and at least one textile layer.

In a preferred embodiment of the invention the coating an object is coated with is perforated. Such a perforation may result in an improved moisture and gas exchange between the environment and the underlying material and an improved prevention of blisters.

In a preferred embodiment of the invention, the coating has a thickness of 5 $\mu$m -3 mm. In this range the risk of sagging und running is significantly reduced and concomitantly the layer is thick enough to provide an increased durability.

The invention also comprises a method for producing the coating, which has the following steps:

I) applying the following components, preferably as a mixture, to an object to be coated to obtain an intermediate product disposed on the object and preferably covering ≥ 50% of the object's surface:

A) a polysaccharide binder,
B) a filler material,
C) a plasticizer, namely a polyhydric alcohol, and
D) a solvent, preferably a water-based solvent,
Optionally:
E) an additive selected from the group consisting of pigments, defoamers, fragrances, flame retardants, UV-stabilizer and mixtures of the foregoing.

wherein the weight ratio of component D) to component A) is ≥ 1, preferably ≥ 5,
Optionally:
II) drying and/or curing the intermediate product, i.e. removing solvent, until weight constancy (i.e. less than 0.1% weight loss per hour when dried at 50°C) occurs, preferably at a temperature ≥ 30°C.

The mixture of the components A)-D) and optionally E) is obtained by dissolving and/or dispersing the filler material, the binder, the plasticizer and optionally an additive in a solvent,

The setting of the binder preferably takes place at a temperature ≥ 50°C, more preferably ≥ 70°C, but regularly ≤ 150°C.

The invention also relates to a composite material, in particular a coating, obtained by the above process.

The invention also relates to the use of the inventive composition in an injection moulding process for the production of an injection molded part.

The invention also relates to a composition as defined in the foregoing and the claims with the difference that this composition does not comprise a plasticizer. This composition comprises components A), B) and D) in the following proportions:

A) 2-30 wt.-%, preferably 5-15 wt.-%, and/or
B) 3-35 wt.-%, preferably 5-15 wt.-%, and/or
D) 35-95 wt.-%. preferably 50-90 wt.-%.

**EXAMPLES**

The invention will now be explained in more detail with the aid of a specific embodiment.

**Manufacturing Example**

50 g of limestone powder are dispersed in a mixture of 10 g glycerol, 10 g dextrin and 10 g agar-agar in 100 ml water with aid of a stirrer at > 500 rpm to obtain a homogeneous and uniform dispersion. The mixture is heated to 90°C, while mixing is continued at > 500 rpm. The temperature is maintained while observing the increase in viscosity of the mixture within minutes, indicating readiness for coating. The heated composition is applied onto a wood surface of a wooden plate previously treated with a water-based acrylic coating. By using a direct coating procedure and the squeegee technique a coating thickness of approximately 3 mm is achieved. Subsequently, the wooden plate including the coating is transferred to an oven preheated to 95°C and maintained there for a duration of 12 mins to allow for proper curing and drying of the final coating.

**Claims**

1. **Composition** comprising the following components:

A) a polysaccharide binder,
B) a filler material,
C) a plasticizer, namely a polyhydric alcohol, and
D) a solvent, preferably water,
**wherein**

the weight ratio of component D) to component A) is ≥ 1, preferably ≥ 5.

2. The **composition** according to claim 1, wherein the weight proportions of the components A) to D) in the composition are as follows:

A) 2-30 wt.-%, preferably 5-15 wt.-%, and/or
B) 3-35 wt.-%, preferably 5-15 wt.-%, and/or
C) 2-30 wt.-%, preferably 5-15 wt.-%, and/or
D) 35-95 wt.-%. preferably 50-90 wt.-%.

3. The **composition** according to any one of the preceding claims, further comprising following component:
E) an additive selected from the group consisting of pigments, defoamers, fragrances, flame retardants, UV-stabilizer, hydrophobic agents and mixtures of the foregoing.

4. The **composition** according to claim 3, wherein the weight proportion of the component E) in the composition is 0.5-30 wt.-%, preferably 2-10 wt.-%.

5. The **composition** according to any one of the preceding claims, wherein the plasticizer is selected from the group consisting of glycerol, sorbitol, 1,2-propanediol, glycol and alditols.

6. The **composition** according to any one of the preceding claims, wherein the filler material is an inorganic salt, which is selected from the group consisting of iron oxide, limestone, titanium dioxide, chalk, kaolin, marble powder, charcoal, shredded glass and zeolite.

7. The **composition** according to any one of the preceding claims, wherein the polysaccharide binder is selected from the group consisting of agar-agar, chitosan, pectin and xanthan, modified starch, or mixtures of the foregoing.

8. The **composition** according to any one of the preceding claims, wherein the polyhydric alcohol is an aliphatic alcohol.

9. The **composition** according to claim 8, wherein the chain length of the polyhydric alcohol is from $C_2$ to $C_{10}$.

10. **Composite**, such as a coating, comprising the following components:

    1) a polysaccharide matrix,
    2) a filler material, and
    3) a plasticizer,
    **characterized in that**
    the weight proportions of the components 1) to 3) in the coating are as follows:

    1) 20-45wt.-%,
    2) 5-45 wt.-%,
    3) 10-30 wt.-%.

11. **Composite** according to claim 10, wherein the coating has a transmission in the visible wavelength range of $\geq 30\%$.

12. **Composite** according to any of claims 10 or 11, wherein the water content in the composite is $\leq 2$ wt.-%.

13. **Object** coated with a composite in the form of a coating as defined in any of the preceding claims, wherein the object is selected from the group consisting of automotive parts, steel objects, leather, artificial leather, appliances, tools, wood objects, electronic devices, footwear, textiles, paper products, foams, in particular biobased foams and/or latex foams; fiber materials such as yarns or textiles, concrete objects, medical devices, food and beverage containers.

14. **Object** according to claim 13, wherein the coating is perforated and/or has a thickness of 5 $\mu$m - 3 mm.

15. **Use** of the composition according to claims 1 - 9 for the production of an injection moulded part.

**EUROPEAN SEARCH REPORT**

Europäisches
Patentamt
European
Patent Office
Office européen
des brevets

Application Number

**EP 24 17 4165**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/057012 A1 (OCEANIUM LTD [GB]) 21 March 2024 (2024-03-21) * page 8, line 7 - page 11, line 27; claims 1-26; examples 1-12 * | 1-15 | INV. C09D5/00 C09D7/61 C09D7/63 C09D101/00 C09D103/00 C09D105/00 |
| X | CN 105 733 331 B (UNIV NANCHANG HANGKONG) 24 July 2018 (2018-07-24) * claims 1-3; examples 1-3 * | 1-9 | |
| X | WO 2022/177432 A1 (LUMIFORTE HOLDING B V [NL]) 25 August 2022 (2022-08-25) * claims 1-19 * | 1-9 | |
| X | US 2010/297458 A1 (KHEMANI KISHAN [AU] ET AL) 25 November 2010 (2010-11-25) * paragraph [0029]; claims 1-29; examples 3, 10; table 2 * | 10-12 | |

TECHNICAL FIELDS
SEARCHED    (IPC)

C09D
C08K

The present search report has been drawn up for all claims

| Place of search | Date of completion of the search | Examiner |
|---|---|---|
| Munich | 14 October 2024 | Schmitt, Johannes |

## ANNEX TO THE EUROPEAN SEARCH REPORT
## ON EUROPEAN PATENT APPLICATION NO.

EP 24 17 4165

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | Publication date | Patent family member(s) | | Publication date |
|---|---|---|---|---|
| WO 2024057012 A1 | 21-03-2024 | GB | 2625506 A | 26-06-2024 |
| | | WO | 2024057012 A1 | 21-03-2024 |
| CN 105733331 B | 24-07-2018 | NONE | | |
| WO 2022177432 A1 | 25-08-2022 | AU | 2022223004 A1 | 07-09-2023 |
| | | CA | 3208034 A1 | 25-08-2022 |
| | | CN | 116997617 A | 03-11-2023 |
| | | EP | 4294884 A1 | 27-12-2023 |
| | | JP | 2024506948 A | 15-02-2024 |
| | | KR | 20230157964 A | 17-11-2023 |
| | | US | 2024132741 A1 | 25-04-2024 |
| | | WO | 2022177432 A1 | 25-08-2022 |
| US 2010297458 A1 | 25-11-2010 | AU | 2007281047 A1 | 07-02-2008 |
| | | CN | 101506291 A | 12-08-2009 |
| | | EP | 2046885 A1 | 15-04-2009 |
| | | JP | 5686866 B2 | 18-03-2015 |
| | | JP | 2009545658 A | 24-12-2009 |
| | | JP | 2013216918 A | 24-10-2013 |
| | | US | 2010297458 A1 | 25-11-2010 |
| | | WO | 2008014573 A1 | 07-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101236734 B1